(19) Europäisches Patentamt / European Patent Office / Office européen des brevets

(11) **EP 3 145 626 B1**

(12) **FASCICULE DE BREVET EUROPEEN**

(45) Date de publication et mention de la délivrance du brevet:
**19.08.2020 Bulletin 2020/34**

(21) Numéro de dépôt: **15732318.9**

(22) Date de dépôt: **21.05.2015**

(51) Int Cl.:
**B01D 63/06** (2006.01)  **B01D 71/02** (2006.01)
**B01D 69/04** (2006.01)

(86) Numéro de dépôt international:
**PCT/FR2015/051342**

(87) Numéro de publication internationale:
**WO 2015/177476 (26.11.2015 Gazette 2015/47)**

(54) **FILTRE TANGENTIEL AVEC UN ELEMENT SUPPORT COMPRENANT UN ENSEMBLE DE CANAUX**

TANGENTIALFILTER MIT STÜTZELEMENT MIT EINER REIHE VON KANÄLEN

TANGENTIAL FILTER WITH A SUPPORTING ELEMENT INCLUDING A SET OF CHANNELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2014 FR 1454637**

(43) Date de publication de la demande:
**29.03.2017 Bulletin 2017/13**

(73) Titulaire: **SAINT-GOBAIN CENTRE DE RECHERCHES ET D'ETUDES EUROPEEN**
**92400 Courbevoie (FR)**

(72) Inventeurs:
• **RODRIGUES, Fabiano**
 **84220 Roussillon (FR)**
• **NEUFERT, Ronald**
 **96247 Michelau (DE)**
• **MOELLER, Malte**
 **96472 Rödental (DE)**
• **VINCENT, Adrien**
 **13440 Cabannes (FR)**

(74) Mandataire: **Saint-Gobain Recherche Département Propriété Industrielle**
**39 Quai Lucien Lefranc**
**93300 Aubervilliers (FR)**

(56) Documents cités:
WO-A1-02/45831    DE-A1- 19 854 319
FR-A1- 2 876 922    US-A- 6 077 436

**Description**

L'invention se rapporte au domaine des structures filtrantes en un matériau inorganique destinées à la filtration des liquides en particulier les structures revêtues d'une membrane afin de séparer des particules ou des molécules d'un liquide, plus particulièrement de l'eau, notamment de l'eau de production issue de l'extraction pétrolière ou des gaz de schiste.

On connaît depuis longtemps des filtres utilisant des membranes céramiques ou non pour réaliser la filtration de fluides variés, notamment d'eaux polluées. Ces filtres peuvent fonctionner selon le principe de la filtration frontale, cette technique impliquant le passage du fluide à traiter à travers un média filtrant, perpendiculairement à sa surface. Cette technique est limitée par l'accumulation de particules et la formation d'un gâteau à la surface du média filtrant, et donne lieu à une chute rapide des performances ainsi qu'une baisse du niveau de filtration.

Selon une autre technique à laquelle se rapporte la présente invention, on utilise la filtration tangentielle, qui, au contraire, permet de limiter l'accumulation de particules, grâce à la circulation longitudinale du fluide à la surface de la membrane. Les particules restent dans le flux de circulation alors que le liquide peut traverser la membrane sous l'effet de la pression. Cette technique assure une stabilité des performances et du niveau de filtration.

Les points forts de la filtration tangentielle sont donc sa facilité de mise en œuvre, sa fiabilité grâce à l'utilisation des membranes organiques et/ou inorganiques de porosité adaptées pour effectuer ladite filtration, et son fonctionnement en continu.

La filtration tangentielle fait appel à peu ou pas d'adjuvant et fournit deux fluides séparés qui peuvent être tous deux valorisables : le concentrât (également appelé retentât) et le filtrat (également appelé perméat) : il s'agit d'un procédé propre qui respecte l'environnement.

Les techniques de filtration tangentielle sont notamment utilisées pour la microfiltration, l'ultrafiltration, la nanofiltration.

On connaît ainsi de la technique actuelle de nombreuses structures de filtres fonctionnant suivant les principes de la filtration tangentielle. Elles comprennent ou sont constituées à partir de supports tubulaires en un matériau inorganique poreux formés de parois délimitant des canaux longitudinaux parallèles à l'axe desdits supports. Le filtrat passe au travers des parois puis est évacué au niveau de la surface extérieure périphérique du support poreux.

La surface desdits canaux est également habituellement recouverte d'une membrane, de préférence en un matériau inorganique poreux, appelée membrane ou couche séparatrice membranaire dans la présente description, dont la nature et la morphologie sont adaptées pour arrêter les molécules ou les particules dont la taille est proche ou supérieure au diamètre médian des pores de ladite membrane lorsque le fluide filtré se répand dans la porosité du support poreux. La membrane est classiquement déposée sur la surface interne des canaux par un procédé d'enduction d'une barbotine du matériau inorganique poreux suivie d'un traitement thermique de consolidation, notamment un séchage et éventuellement d'un frittage des membranes céramiques.

Dans de telles structures, l'un des paramètres les plus critiques consiste à positionner et dimensionner les canaux pour limiter au maximum la perte de charge à travers le filtre, et tout particulièrement la pression transmembranaire, c'est-à-dire la différence existant entre la pression du fluide initial côté alimentation et la pression du fluide en sortie, côté filtrat de la membrane. Il est ainsi possible de réduire la consommation d'énergie des pompes de recirculation tout en favorisant la production d'une quantité élevée de filtrat, le système de filtration fonctionnant préférentiellement en régime turbulent afin d'éviter le colmatage trop rapide des canaux. Différentes géométries ont été proposées dans la technique pour limiter ladite perte de charge et en particulier la pression transmembranaire dans de telles structures. Notamment des structures multicanaux ont été proposées, qui présentent une section non circulaire dans un plan de coupe perpendiculaire à l'axe du support. Toutes ces modifications visent en outre à augmenter la surface de filtration totale du filtre par rapport au volume global du support poreux utilisé.

A titre d'exemple, la publication US 5,454,947 propose des structures dont les canaux ont une section non circulaire, avec des canaux plus grands en périphérie et des parois radiales plus épaisses en direction de la périphérie du filtre, dans le but d'augmenter la contribution des canaux internes et favoriser ainsi le transfert du perméat vers l'extérieur du filtre.

La demande EP0686424 dévoile une structure notamment avec des parois radiales d'épaisseur constante afin d'obtenir une répartition homogène de la membrane.

La demande EP0778073 divulgue une structure avec une paroi externe d'épaisseur variable et croissante en direction des congés de raccordement avec les parois radiales, afin d'augmenter la résistance mécanique du filtre.

La publication EP0778074 propose une structure multicanaux comprenant plusieurs morphologies de canaux dont le rapport de diamètres hydrauliques est compris entre 0,75 et 1,3 et dont le rapport de surfaces est compris entre 0,75 et 1,3, afin d'éviter un décolmatage hétérogène.

La demande EP0780148 préconise des structures avec des canaux à gradient de forme mais présentant un même diamètre hydraulique.

WO00/29098 et WO01/62370 proposent une configuration avec un agencement particulier de canaux de base en forme de tiers de cercle et/ou de différents quadrilatères afin d'augmenter le rapport surface exposée au fluide le long des canaux sur la section d'écoulement c'est-à-dire la surface de canal dans le plan de section transversal perpendiculaire à l'axe du filtre.

Le brevet US 7699903 B2 décrit des couches séparatrices membranaires, ainsi que leurs conditions de dépôt dans des structures de filtration tangentielles. On pourra notamment se reporter à cette publication pour plus de détails concernant l'obtention et le dépôt des couches séparatrices membranaires au sens de la présente invention.

Le document US 6 077 436 A décrit fig.11 une coupe transversale d'un filtre comprenant trois catégories de canaux.

Toutes les modifications précédentes visent à obtenir un filtre présentant les propriétés optimales pour l'application et en particulier :

- une perte de charge faible et, de façon constante, un flux interne en régime turbulent afin de limiter le colmatage du filtre et le bouchage des canaux, grâce à la pression du fluide et au cisaillement généré au niveau des parois des canaux circulant dans ceux-ci.
- une géométrie de canaux permettant un profil de vitesse de flux sortant (perméat) le plus élevé et le plus homogène possible d'un canal à un autre dans le plan de section du filtre,
- une forte résistance mécanique et en particulier une résistance à l'abrasion élevée
- une performance de filtration la plus durable possible.

En particulier, il existe encore un besoin pour une structure filtrante ayant une efficacité toujours supérieure de filtration, en particulier un débit suffisant de filtrat pendant une durée de filtration la plus longue possible, sans bouchage du filtre. Les travaux menés par la société déposante ont montré en particulier une corrélation sensible entre une telle efficacité de filtration, la configuration des canaux, en particulier des canaux les plus périphériques, et la répartition de la couche séparatrice membranaire déposée sur la surface interne des canaux.

En particulier, il a été mis en évidence par les travaux de la société déposante, décrits ci-après, une relation étroite entre la capacité de filtration de la structure (mesurée par le débit de filtrat obtenu à une pression transmembranaire donnée au sein du filtre) et la configuration des canaux (taille et forme), en particulier des canaux les plus périphériques, en relation avec le degré d'homogénéité de l'épaisseur de ladite couche séparatrice membranaire au sein desdits canaux.

Dans sa forme la plus générale, la présente invention se rapporte ainsi à un filtre tangentiel pour la filtration d'un fluide tel qu'un liquide, comprenant ou constitué par un élément support fait dans un matériau inorganique poreux de préférence non oxyde. Ledit élément présente une forme tubulaire délimitée par une surface externe et comprend dans sa portion interne un ensemble de canaux, d'axes parallèles entre eux et séparés les uns des autres par des parois dudit matériau inorganique poreux. Le filtre selon l'invention comprend une partie centrale ne comprenant que des canaux internes Ci reliés entre eux par des éléments de parois poreux communs et des canaux périphériques Cp, c'est à dire des canaux ayant une paroi commune avec la surface externe de l'élément support. Selon l'invention, lesdits canaux internes et périphériques sont recouverts sur leur surface interne d'une couche séparatrice membranaire destinée à entrer en contact avec ledit fluide à filtrer circulant dans ceux-ci et les canaux internes présentent un diamètre hydraulique sensiblement équivalent. Un filtre tangentiel selon la présente invention, est défini selon la vendication 1.

Un filtre tangentiel selon la présente invention peut également présenter les caractéristiques préférées suivantes, chacune des caractéristique décrites ci-après pouvant bien entendu et le cas échéant être combinée indifféremment avec une ou plusieurs autres :

- Le canal B présente un diamètre hydraulique $Dh_B$ sensiblement identique au diamètre hydraulique des canaux internes (Ci).
- Le canal B est le canal périphérique qui présente le plus petit diamètre hydraulique $Dh_B$.
- Le premier canal périphérique A est de forme non circulaire. Il présente au moins une paroi concave ou convexe, voire au moins une paroi concave et convexe. Ces formes de paroi permettent d'augmenter la surface de filtration. De préférence le premier canal présente une forme évasée, par exemple en forme de goutte ou de bouteille, telle que sa surface s'étende principalement en direction de l'axe central du support filtrant de manière à s'enchevêtrer avec la couronne de canaux non périphériques la plus proche. En particulier, la surface du canal A de forme évasée ou elliptique, selon le plan transversal P, s'étend principalement selon un axe depuis la périphérie de l'élément support vers son axe central. Avantageusement, la surface de la paroi commune entre le canal A et la surface externe est courbe. De manière encore plus avantageuse, ladite surface externe est courbe de façon à obtenir une paroi externe d'épaisseur sensiblement constante.
- Selon le plan transversal P, les canaux internes (Ci) et de préférence le canal B présentent une section sensiblement elliptique, le rapport entre le grand axe et le petit axe de l'ellipse étant compris entre 2 et 1, de préférence entre 1,5 et 1 et de manière très préférée entre 1,2 et 1.
- Le deuxième canal périphérique B présente une section sensiblement circulaire. Son diamètre est compris avantageusement entre 1 et 7 mm de préférence entre 2 et 5 mm.

- Le canal B de plus petit diamètre hydraulique présente, selon ledit plan transversal P, une forme sensiblement équivalente à celle desdits canaux internes.
- Les canaux internes (Ci) présentent une section sensiblement circulaire, selon ledit plan transversal P.
- La surface de la paroi commune entre le canal A et la surface externe est courbe.
- Le rapport Dh entre le diamètre hydraulique $Dh_A$ du premier canal A sur le diamètre hydraulique $Dh_B$ du second canal B est inférieur à 2, de préférence est inférieur à 1,5 et de manière plus préférée est inférieur à 1,4.
- L'épaisseur moyenne de la paroi externe des canaux périphériques est de préférence comprise entre 0,2 et 1,5 mm, de préférence entre 0,5 et 1,2 mm. Une telle épaisseur permet en particulier de combiner une bonne résistance mécanique et un débit de perméat élevé.
- Le rapport $R_s$ des surfaces $S_A$ et $S_B$ des deux canaux périphériques adjacents A et B ($R_s = R_{SA}/R_{SB}$) est de préférence compris entre 1,1 et 3,5, de manière plus préféré est compris entre 1,2 et 2,5 et de manière encore plus préférée est compris entre 1,4 et 2,3.
- Le diamètre hydraulique des canaux internes est inférieur à 7 mm, et de préférence compris entre 1 et 5 mm, de manière plus préférée entre 1,5 et 4,5, voire entre 2 et 4 mm.
- La partie centrale de l'élément support ne comprend que des canaux Ci partageant entre eux des éléments de paroi poreuse.
- La partie centrale comprenant uniquement des canaux internes représente, selon un plan de coupe transversal du filtre, au moins 20% de la surface du support selon ladite coupe, et de préférence au moins 30%, voire au moins 50% ou même plus de 60% de ladite surface, selon ladite coupe.
- La surface cumulée occupée par les canaux internes, selon un plan de coupe transversal du filtre, représente au moins 10% de la surface totale du support selon ladite coupe, et de préférence au moins 20%, voire au moins 30% ou même plus de 50% de ladite surface totale, selon ladite coupe.
- Le nombre de canaux internes Ci est supérieur au nombre de canaux B.
- L'élément support ne comporte dans sa couronne périphérique que des canaux A et des canaux B.
- L'élément support ne comporte dans sa couronne périphérique qu'une seule configuration (un seul type) pour les canaux A et qu'une seule configuration (un seul type) pour les canaux B.
- L'élément support est à base polygonale ou à base circulaire.
- Au moins un canal interne Ci ne partage de paroi commune avec un canal périphérique A.
- L'élément support présente selon une coupe transversale un diamètre équivalent compris entre 20 et 80 mm Par diamètre équivalent, on entend le diamètre qu'aurait un cercle de même aire que la section considérée de l'élément support, selon ledit plan de coupe transversal.
- La porosité du matériau constituant support poreux est comprise entre 20 et 60%.
- Le diamètre médian de pores du matériau constituant le support poreux est compris entre 5 et 50 micromètres, de préférence supérieur à 5 micromètres et inférieur à 50 micromètres, de manière plus préférée entre 10 et 40 micromètres.
- Le support poreux comprend et de préférence est constitué en un matériau céramique, de préférence un matériau céramique non oxyde, de préférence choisi parmi le carbure de Silicium SiC, en particulier le SiC fritté en phase liquide ou en phase solide, le SiC recristallisé, le nitrure de Silicium, en particulier $Si_3N_4$, l'oxynitrure de Silicium, en particulier $Si_2ON_2$, l'oxynitrure de Silicium et d'Aluminium, ou une combinaison de ceux-ci. De préférence le support est constitué de carbure de Silicium, de manière encore plus préférée de SiC recristallisé.
- La surface interne des canaux du support filtrant est revêtue d'une couche séparatrice membranaire constituée essentiellement d'un matériau céramique, de préférence à base de céramique non oxyde, de préférence dans liste parmi le Carbure de Silicium SiC, en particulier le SiC fritté en phase liquide ou en phase solide ou le SiC recristallisé, le nitrure de Silicium, en particulier Si3N4, l'oxynitrure de Silicium, en particulier Si2ON2, l'oxynitrure de Silicium et d'Aluminium, le nitrure de bore BN, ou une combinaison de ceux-ci.
- La porosité de la couche séparatrice membranaire mesurée par analyse d'image est au moins 5%, de préférence au moins 10%, moins élevée que celle du support. De préférence la porosité de la couche séparatrice membranaire est inférieure à 70% et de manière très préférée est comprise entre 10 et 70%.
- Le diamètre médian équivalent de pores mesuré par analyse d'image de la couche formant la couche séparatrice membranaire est compris entre 1nm et 5 micromètres.
- La surface de front ouverte (OFA) est de préférence supérieure à 30%, de manière plus préférée entre 30% et 60%.
- la surface de filtration est supérieure à 0,35, de préférence supérieure à $0,4m^2$/m de longueur de filtre.

Au sens de la présente invention on donne les définitions suivantes :
Par canal interne (Ci), on entend au sens de l'invention les canaux qui ne partagent pas de paroi commune avec la surface externe de l'élément support. Comme indiqué précédemment, l'ensemble des canaux internes, délimite la partie interne du support ou du filtre, à l'exclusion de la couronne périphérique comprenant les canaux A et B.

De façon complémentaire un canal périphérique (Cp) présente au moins une paroi commune avec la surface externe de l'élément support est dit périphérique. Selon l'invention, les canaux périphériques A et B délimitent une couronne périphérique (ou externe) du support ou du filtre.

Par diamètre hydraulique sensiblement équivalent des canaux, on entend au sens de l'invention que le rapport du diamètre hydraulique entre lesdits canaux varie au maximum entre 0,95 et 1,05.

On entend par surface interne ($S_A$ ou $S_B$) d'un canal l'aire (en mm$^2$) de la section d'écoulement dudit canal, selon un plan transversal.

Le diamètre hydraulique $D_h$ d'un canal est calculé, dans un plan de section transversal P quelconque de la structure tubulaire, à partir de la surface de la section du canal S dudit canal et de son périmètre P, selon ledit plan de section et par application de l'expression classique suivante :

$$D_h = 4 \times S / P$$

Il est entendu par répartition plus homogène de la couche séparatrice membranaire le fait que dans un plan transversal P de la structure tubulaire, le rapport des épaisseurs moyennes de ladite couche mesurée respectivement sur un premier type de canal A et sur un deuxième type de canal B est plus proche de 1.

On entend par couronne de canaux, un ensemble de canaux situés sensiblement à même distance de l'axe central du support filtrant.

Suivant cette définition, la couronne périphérique est au sens de l'invention la couronne de canaux la plus externe, qui comprend les canaux A et B.

Une même configuration ou un même type de canaux est défini par des canaux présentant sensiblement la même forme et la même surface dans le plan de section transversale P, par exemple à plus ou moins cinq pour cent près. Ils peuvent être situés sur différentes couronnes ou sur une même couronne de canaux.

L'OFA (« open front area » en anglais) ou surface de front ouverte, est obtenue en calculant le rapport en pourcentage de l'aire couverte par la somme des sections transversales des canaux sur l'aire totale de la section transversale correspondante du support poreux.

La porosité et le diamètre médian du support poreux décrits dans la présente description sont déterminés de manière connue par porosimétrie au mercure.

Le volume de pores est mesuré par intrusion de Mercure à 2000 bars à l'aide d'un porosimètre à mercure Autopore IV série 9500 Micromeritics, sur un échantillon de 1 cm$^3$ prélevé dans un bloc du produit, la région de prélèvement excluant la peau s'étendant typiquement jusqu'à 500 microns depuis la surface du bloc. La norme applicable est l'ISO 15901-1.2005 part 1. L'augmentation de pression jusqu'à haute pression conduit à « pousser » le mercure dans des pores de taille de plus en plus petite. L'intrusion du mercure se fait classiquement en deux étapes. Dans un premier temps, une intrusion de mercure est réalisée en basse pression jusqu'à 44 psia (environ 3 bar), en utilisant une pression d'air pour introduire le mercure dans les plus gros pores (>4 $\mu$m). Dans un deuxième temps, une intrusion à haute pression est réalisée avec de l'huile jusqu'à la pression maximale de 30000 psia (environ 2000 bar).

En application de la loi de Washburn mentionnée dans la norme ISO 15901-1.2005 part 1, un porosimètre à mercure permet ainsi d'établir une distribution de tailles des pores en volume. Le diamètre médian de pores des parois poreuses correspond à un seuil de 50% de la population en volume.

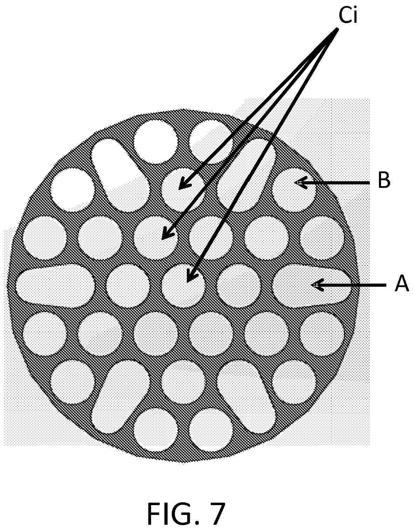

La porosité de la membrane, correspondant au volume total des pores dans la membrane, et le diamètre médian de pores de la membrane sont avantageusement déterminés selon l'invention à l'aide d'un microscope électronique à balayage. Par exemple, on réalise des sections polies d'une paroi du support en coupe transversale, comme illustré par la figure 7 ci-jointe, de manière à visualiser toute l'épaisseur du revêtement sur une longueur cumulée d'au moins 1,5 cm. L'acquisition des images est effectuée sur un échantillon d'au moins 50 grains. L'aire et le diamètre équivalent de chacun des pores sont obtenus à partir des clichés par des techniques classiques d'analyse d'images, éventuellement après une binarisation de l'image visant à en augmenter le contraste. On déduit ainsi une distribution de diamètres équivalents, dont on extrait le diamètre médian.

De même on peut déterminer par cette méthode une taille médiane des particules constituant la couche membranaire.

La taille médiane des particules constituant la couche membranaire est en général comprise entre 20 nanomètres et 10 micromètres, de préférence entre 100 nanomètres et 2 micromètres.

Au sens de la présente description et sauf mention contraire, le diamètre médian des particules ou des pores désigne respectivement le diamètre des particules ou de pores au-dessous duquel se trouve 50% en nombre de la population. Comme déjà indiqué précédemment, le diamètre médian de pores au sein de la membrane est obtenu par analyse d'image et calculé à partir d'une répartition des pores en nombre. Le diamètre médian de pores du support est déterminé sur la base d'une répartition en volume, tel que mesurée par les techniques classiques de porométrie au mercure.

Au sens de la présente invention, tous les canaux de la structure, en particulier les canaux du type A et les canaux du type B, présentent bien évidemment une section et une répartition sensiblement constante et identique sur toute la longueur du filtre, quel que soit le plan de coupe transversal P.

On entend par frittage en phase liquide, un frittage dans lequel au moins un des additifs de frittage, plusieurs additifs ou encore une phase formée à partir de la combinaison de certains de ces additifs, voire certaines impuretés du produit à fritter, sont susceptibles de former une phase liquide lors du traitement thermique de frittage, en une quantité telle qu'elle soit suffisante pour permettre le réarrangement des grains et les amener ainsi au contact les uns des autres. Un frittage en phase solide est un frittage dans lequel aucun des additifs de frittage, ou encore aucune phase formée à partir de la combinaison de certains de ces additifs, voire aucune impureté du produit à fritter ne sont susceptibles de former une phase liquide telle qu'elle soit suffisante pour permettre le réarrangement des grains et les amener ainsi au contact les uns des autres.

Par additif de frittage, on entend un composé connu habituellement pour permettre et/ou accélérer la cinétique de la réaction de frittage.

On donne ci-après un exemple permettant la réalisation d'un filtre tangentiel selon l'invention, bien évidemment non limitative des procédés permettant d'obtenir un tel filtre :

Selon une première étape, le support filtrant est obtenu par extrusion d'une pâte au travers d'une filière configurée selon la géométrie de la structure à réaliser selon l'invention. L'extrusion est suivie d'un séchage et d'une cuisson afin de fritter le matériau inorganique constituant le support et obtenir les caractéristiques de porosité et de résistance mécanique nécessaire à l'application.

Par exemple, lorsqu'il s'agit d'un support en SiC, il peut être en particulier obtenu selon les étapes de fabrication suivantes :

- malaxage d'un mélange comportant des particules de carbure de silicium de pureté supérieure à 98% et présentant une granulométrie telle que 75% en masse des particules présente un diamètre supérieur à 30 micromètres, le diamètre médian en masse de cette fraction granulométrique (mesuré par granulomètre laser) étant inférieur à 300 micromètres. Le mélange comporte aussi un liant organique du type dérivé de cellulose. On ajoute de l'eau et on malaxe jusqu'à obtenir une pâte homogène dont la plasticité permet l'extrusion, la filière étant configurée pour l'obtention des monolithes selon l'invention.
- séchage des monolithes crus par micro-onde pendant un temps suffisant pour amener la teneur en eau non liée chimiquement à moins de 1% en masse.
- cuisson jusqu'à une température d'au moins 1300°C dans le cas de support filtrant à base de SiC fritté en phase liquide, de nitrure de Silicium, d'oxynitrure de Silicium, d'oxynitrure de Silicium et d'Aluminium ou meme de BN et d'au moins 1900°C et inférieure à 2400°C dans le cas d'un support filtrant à base de SiC recristallisé ou fritté en phase solide. Dans le cas d'un support filtrant en nitrure ou oxynitrure l'atmosphère de cuisson est de préférence azotée. Dans le cas d'un support filtrant en SiC recristallisé l'atmosphère de cuisson est de préférence neutre et plus particulièrement d'argon. La température est maintenue typiquement pendant au moins 1 heure et de préférence pendant au moins 3 heures. Le matériau obtenu présente une porosité ouverte de 20 à 60% en volume et un diamètre médian de pores de l'ordre de 5 à 50 micromètres.

Le support filtrant est ensuite revêtu selon l'invention d'une membrane (ou couche séparatrice membranaire). Une ou plusieurs couches dite primaires peuvent être déposées avant de former la membrane filtrante selon diverses techniques connues de l'homme du métier : techniques de dépôt à partir de suspensions ou de barbotines, techniques de dépôt chimique en phase vapeur (CVD) ou de projection thermique, par exemple projection plasma (plasma spraying).

De préférence les couches de primaire et la membrane sont déposées par enduction à partir de barbotines ou de suspensions. Une première couche est préférentiellement déposée en contact avec le substrat (couche primaire), jouant le rôle de couche d'accrochage. La formulation du primaire comporte 50% en masse de grains de SiC (diamètre médian entre 2 et 20 micromètres) et 50% d'eau désionisée. Une seconde couche de porosité plus fine est déposée sur la couche de primaire, et constitue la membrane proprement dite. La porosité de cette dernière couche est adaptée pour conférer à l'élément filtrant ses propriétés finales. La formulation de la membrane comporte de préférence 50% en masse de grains de SiC (notamment de diamètre médian entre 0,1 et 2 micromètres) et 50% d'eau désionisée.

Afin de contrôler la rhéologie de ces barbotines et respecter une viscosité adéquate (typiquement comprise entre 0,01 et 1,5, de préférence entre 0,1 et 0,8 Pa.s sous un gradient de cisaillement de 1s$^{-1}$ mesurée à 22°C selon la norme DINC33-53019), des agents épaississants (selon des proportions typiquement entre 0,02 et 2% de la masse d'eau), des agents liants (typiquement entre 0,5 et 20% de la masse de poudre de SiC), des agents dispersants (entre 0,01 et 1% de la masse de poudre de SiC) peuvent être ajoutés. Les agents épaississants sont de préférence des dérivés cellulosiques, les agents liants de préférence des PVA ou des dérivés d'acrylique et les agents dispersants sont de préférence du type polymétacrylate d'ammonium.

Des ajouts organiques exprimés en poids de la barbotine, notamment du Dolapix A88 comme agent défloculant par exemple selon une proportion de 0,01 à 0,5%; de la Tylose par exemple de type MH4000P comme épaississant selon une proportion de 0,01 à 1%, du PVA comme agent collant à raison de 0,1 à 2% exprimé en masse d'extrait sec; du monoéthylène glycol comme plastifiant et de l'éthanol à 95% volume comme réducteur de tension de surface, sont plus particulièrement appropriés.

Ces opérations d'enduction permettent typiquement d'obtenir une couche de primaire d'épaisseur d'environ 30 à 40 micromètres après séchage. Lors de la deuxième étape d'enduction une couche de membrane d'épaisseur d'environ 30-40 micromètres est obtenue après séchage.

Le support ainsi revêtu est ensuite séché à température ambiante typiquement pendant au moins 30 minutes puis à 60°C pendant au moins 24 heures. Les supports ainsi séchés puis sont frittés à une température de cuisson typiquement comprise entre 1700 et 2200°C sous atmosphère non oxydante, de préférence sous argon, de manière à obtenir une porosité de membrane (mesurée par analyse d'image tel que décrit précédemment) comprise entre 10 et 40 % en volume et un diamètre médian équivalent de pores (mesuré par analyse d'image) compris de préférence entre 50 nm et 10 micromètres, voire entre 100 nm et 5 micromètres

Les membranes de filtration selon l'invention présentent de préférence les caractéristiques suivantes :

- Elles sont constituées essentiellement d'un matériau céramique, de préférence à base de céramique non oxyde, de préférence choisi parmi le carbure de Silicium SiC, en particulier le SiC fritté en phase liquide ou en phase solide ou le SiC recristallisé, le nitrure de Silicium, en particulier $Si_3N_4$, l'oxynitrure de Silicium, en particulier $Si_2ON_2$, l'oxynitrure de Silicium et d'Aluminium, le nitrure de bore BN, ou une combinaison de ceux-ci. De préférence la membrane est à base de carbure de silicium typiquement recristallisé.
- Elles sont déposées sur une ou plusieurs couches d'un primaire de porosité, en particulier de diamètre de pores, intermédiaire entre la porosité (plus grande) des parois et celle de la membrane, pour faciliter sa déposition et son homogénéité. De préférence le ratio entre la taille moyenne des particules constituant la couche intermédiaire et de celle des particules constituant la couche membrane est compris entre 5 et 50. De préférence le ratio entre la taille moyenne des grains constituant la paroi poreuse et de celle des particules constituant la couche intermédiaire membrane est compris entre 2 et 20.
- La porosité de la couche séparatrice membranaire mesurée par analyse d'image est au moins 5%, de préférence au moins 10%, moins élevée que celle du support. De préférence la porosité de la couche séparatrice membranaire est inférieure à 70% et de manière très préférée est comprise entre 10 et 70%.

Le diamètre médian équivalent de pores mesuré par analyse d'image de la couche formant la membrane est compris entre 1 nm et 5 micromètres.

Les figures associées aux exemples qui suivent sont fournis afin d'illustrer l'invention et ses avantages, sans bien entendu que les modes de réalisations ainsi décrits puissent être considérés comme limitatifs de la présente invention. Dans les figures et pour plus de clarté, on a représenté le groupe G constitué des deux canaux périphériques adjacents A et B au sens de la présente invention.

Dans les figures ci-jointes :

- La figure 1 illustre une configuration classique d'un filtre tubulaire selon la technique actuelle, selon un plan de coupe transversal P.
- La figure 2 schématise une première configuration selon invention la plus avantageuse.
- La figure 3 schématise une autre configuration d'un filtre tubulaire selon l'invention.
- La figure 4 illustre un mode de réalisation comparatif de celui schématisé par la figure 3, et non conforme à la présente invention.
- La figure 5 illustre le plan de coupe transversal P d'une structure filtrante et son axe central A, au sens de la présente invention.
- La figure 6 est un cliché de microscopie d'un filtre selon l'invention, montrant la couche de séparation membranaire.
- La figure 7 schématise une autre configuration d'un filtre tubulaire selon l'invention.

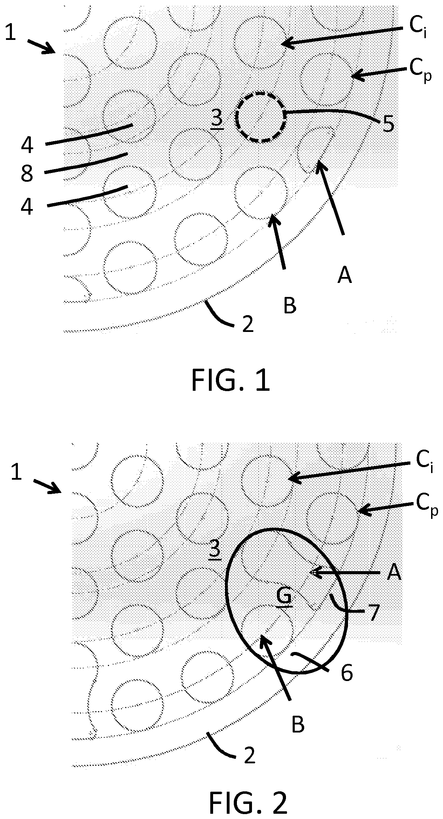

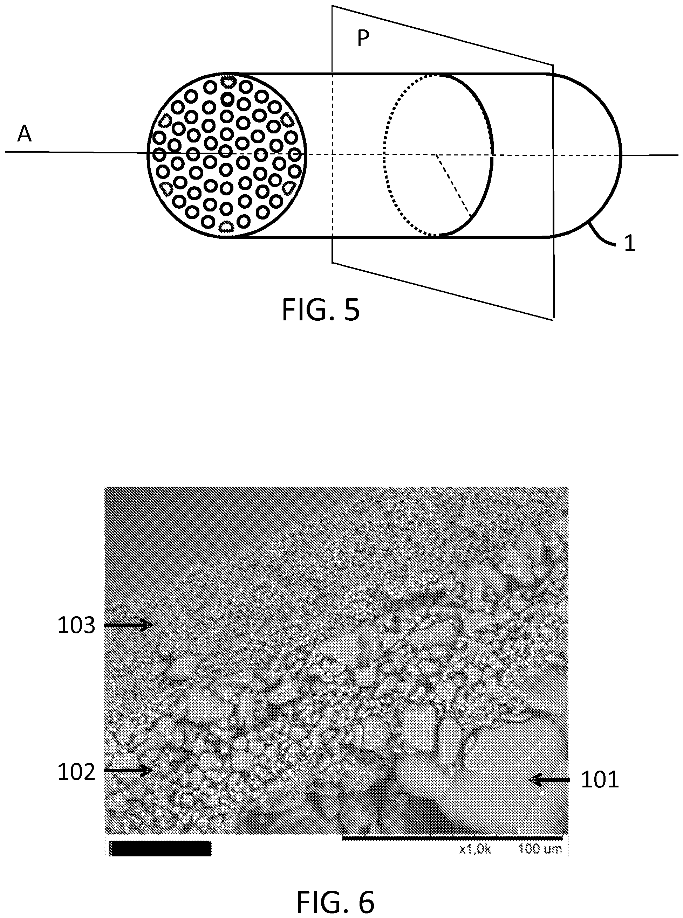

La figure 1 illustre un filtre tangentiel 1 selon la technique actuelle, tel qu'utilisé pour la filtration d'un fluide tel qu'un liquide. La figure 1 représente une vue schématique du plan de coupe transversal P illustré par la figure 5. Le filtre comprend ou le plus souvent est constitué par un élément support 1 fait dans un matériau inorganique poreux de préférence non oxyde. L'élément présente classiquement une forme tubulaire, délimitée par une surface externe 2. Il comprend dans sa portion interne 3 un ensemble de canaux 4 adjacents, d'axes parallèles entre eux et séparés les uns des autres par des parois 8. Les parois sont constituées dans un matériau inorganique poreux laissant passer le filtrat depuis la partie interne 3 vers la surface externe 2. Les canaux 4 sont recouverts sur leur surface interne d'une couche séparatrice membranaire 5, tel qu'illustré par le cliché de microscopie électronique reporté sur la figure 6. Cette couche séparatrice membranaire 5 (ou membrane) entre en contact avec ledit fluide à filtrer circulant dans lesdits canaux. Les canaux 4 de la structure 1 peuvent être répartis en différents groupes : Tous les canaux internes Ci présentent généralement un diamètre hydraulique sensiblement équivalent et de forme circulaire (en section) et constituent la partie centrale de la structure, au sens de la présente invention. La structure filtrante comprend en outre, autour de ladite partie centrale, des canaux périphériques Cp occupant la couronne de canaux la plus externe (ou périphérique) du filtre, lesdits canaux Cp partageant une paroi commune avec la surface externe 2. Selon une configuration classique dans lequel les canaux ont la forme circulaire, une partie minoritaire des canaux (notés A) de la couronne périphérique a nécessairement une forme tronquée, afin de conserver une épaisseur de la paroi externe suffisante. Même si la majorité des autres canaux périphériques ont une forme circulaire (canaux B sur la figure 1) identique à celle des canaux Ci, les recherches menées par la société déposante ont montré que la présence de ces canaux périphériques A de diamètre hydraulique restreint, même en faible nombre, avait une influence négative et sensible sur les performances et l'efficacité de la filtration du filtre, comme il sera décrit par la suite.

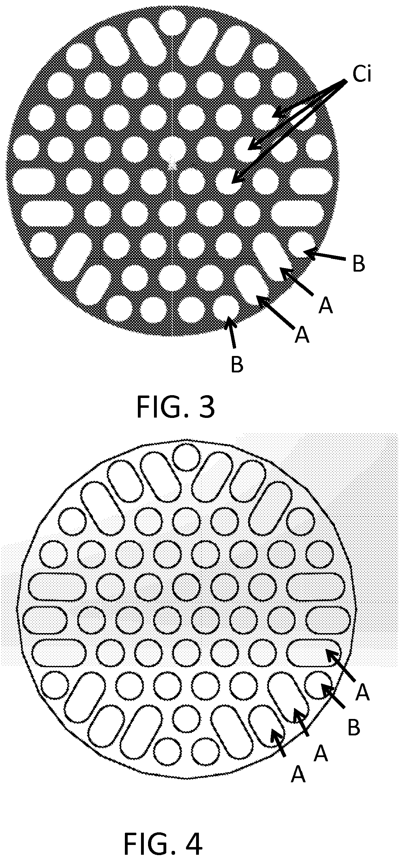

Les figures 2 et 3 illustrent différents modes de réalisation selon l'invention d'un filtre tangentiel selon l'invention, dans lequel la structure comprend également un groupe G de deux canaux périphériques Cp adjacents A et B partageant une paroi commune (respectivement 6 et 7 sur la figure 2), avec la surface externe 2, qui permettent de résoudre un tel problème. Le filtre selon la figure 2 comprend en outre des canaux internes Ci de diamètre hydraulique sensiblement équivalent et de forme circulaire (en section), qui constituent ensemble la partie centrale de la structure, au sens de la présente invention.

Au contraire de l'art antérieur illustré par la figure 1, selon la figure 2 les canaux A sont configurés cette fois de telle manière que leur diamètre hydraulique soit supérieur au diamètre hydraulique des canaux B de section circulaire, ces derniers étant cependant présents en plus grand nombre sur ladite couronne périphérique.

Le filtre selon la figure 3, conforme à l'objet de la présente invention, montre une configuration comprenant trois types de canaux périphériques de diamètre hydraulique Dh différents. Conformément à la présente invention, le nombre de canaux périphériques circulaires B, dont le Dh est identique à celui des canaux internes, est supérieur au nombre de canaux adjacents présentant un Dh supérieur (canaux A).

Au contraire, selon la configuration comparative et non conforme décrite dans la figure 4, le nombre de canaux périphériques B de plus petit Dh est inférieur à celui des canaux adjacents A de plus grande taille.

La figure 4 illustre donc un mode de réalisation comparatif dans lequel les canaux A de plus grand diamètre hydraulique sont cette fois en plus grand nombre que les canaux B, contrairement aux requis de la présente invention.

Quatre supports filtrants correspondant respectivement aux représentations selon les figures 1 à 4 ont été réalisés selon les techniques de l'art par mise en forme et cuisson de structures constituées de carbure de silicium recristallisé poreux, qui correspondent respectivement aux exemples 1 à 4 qui suivent.

Les filtres selon tous les exemples sont obtenus selon le même protocole expérimental qui suit:
On mélange dans un malaxeur :

- 3000 g d'un mélange des deux poudres de particules de carbure de silicium de pureté supérieure à 98% dans les proportions suivantes : 75% en masse d'une première poudre de particules présentant un diamètre médian de l'ordre de 60 micromètres et 25% en masse d'une deuxième poudre de particules présentant un diamètre médian de l'ordre de 2 micromètres. (Au sens de la présente description, le diamètre médian $d_{50}$ désigne le diamètre des particules au-dessous duquel se trouve 50% en masse de la population desdites particules).

- 300 g d'un liant organique du type dérivé de cellulose.

On ajoute de l'eau environ 20% en masse par rapport à la masse totale de SiC et d'additif organique et on malaxe jusqu'à obtenir une pâte homogène dont la plasticité permet l'extrusion d'une structure de forme tubulaire, la filière étant configurée pour l'obtention de blocs monolithes dont les canaux et les parois externes présentent une structure selon la configuration recherchée et telle que représentée sur les figures 1 à 4 ci-jointes. On synthétise ainsi pour chaque configuration 5 à 10 supports crus de 25 mm de diamètre et 30 cm de longueur.

Les monolithes crus ainsi obtenus sont séchés par micro-onde pendant un temps suffisant pour amener la teneur en eau non liée chimiquement à moins de 1% en masse.

Les monolithes sont ensuite cuits jusqu'à une température d'au moins 2100°C qui est maintenue pendant 5 heures. Le matériau obtenu présente une porosité ouverte de 43% et un diamètre moyen de distribution de pores de l'ordre de 25 micromètres, tel que mesuré par porosimétrie mercure.

Une couche séparatrice membranaire est ensuite déposée sur la paroi interne des canaux de la structure support selon le procédé décrit ci-après:

Un primaire d'accrochage de la couche séparatrice est constitué dans un premier temps, à partir d'une barbotine dont la formulation comporte 50% en masse de grains de SiC ($d_{50}$ d'environ 10 micromètres) et 50% d'eau désionisée. Une barbotine du matériau constituant la couche de filtration membranaire est également préparée, dont la formulation comporte 50% en masse de grains de SiC ($d_{50}$ autour de 0,6 micromètre) et 50% d'eau désionisée.

La rhéologie des barbotines a été réglée à 0,5-0,7 Pas à 1s$^{-1}$. Afin de contrôler la rhéologie de ces barbotines et respecter une viscosité typiquement comprise Pa.s environ sous un gradient de cisaillement de 1s$^{-1}$ mesurée à 22°C selon la norme DINC33-53019.

Ces deux couches sont déposées successivement selon le même procédé décrit ci-après : la barbotine est introduite dans un réservoir sous agitation (20 tour/min). Après une phase de désaérage sous vide léger (typiquement 25 millibars) tout en conservant l'agitation, le réservoir est mis en surpression d'environ 0,7 bar afin de pouvoir enduire l'intérieur du support à partir de sa partie basse jusqu'à son extrémité supérieure. Cette opération ne prend que quelques secondes pour un support de 30 cm de longueur. Immédiatement après enduction de la barbotine sur la paroi interne des canaux du support, l'excès est évacué par gravité.

Les supports sont ensuite séchés à température ambiante pendant 30 minutes puis à 60°C pendant 30h. Les supports ainsi séchés sont ensuite cuits à une température de supérieure à 1600°C. La température de cuisson est fonction des caractéristiques requises pour la porosité finale de la membrane, soit un diamètre médian de pores d'environ 1 micromètre et une porosité ouverte de 40%, en volume.

Une coupe transversale est réalisée sur les filtres ainsi obtenus. La structure de la membrane est observée au microscope à balayage. Sur la figure 6 on a reporté un des clichés de microscopie électronique obtenus. On observe sur cette figure le support poreux 100 de forte porosité, la couche de primaire 102 permettant l'accrochage de la couche séparatrice membranaire 103 de plus fine porosité.

Sur la base des clichés de microscopie électronique, on a mesuré par analyse d'image l'épaisseur moyenne de la membrane 103 sur les canaux A et sur les canaux B sur les différentes structures selon les exemples 1 à 4. Les résultats mesurés sont reportés dans le tableau 1 qui suit.

Plus particulièrement, dans le tableau 1 on a reporté le rapport de l'épaisseur moyenne de la membrane (103) ainsi mesurée sur tous les canaux A sur l'épaisseur moyenne de membrane ainsi mesurée sur tous les canaux B. Un ratio proche de 1 indique ainsi une réparation idéale du matériau inorganique filtrant dans tous les canaux du filtre. Au contraire, plus le rapport est éloigné de 1, plus le dépôt de la couche séparatrice membranaire est hétérogène. Dans le tableau 1, la surface de filtration est calculée à partir de la somme cumulé des périmètres de tous les canaux de la structure.

Une mesure de flux est réalisée sur les filtres selon la méthode suivante.

A une température de 25°C un fluide constitué d'eau déminéralisée et chargée à 300 ppm d'huile synthétique alimente les filtres à évaluer sous une pression transmembranaire de 0,5 bars et une vitesse de circulation dans les canaux de 2 m/s. Le perméat (l'eau) est récupéré à la périphérie du filtre. Lors de l'essai le filtre se colmate peu à peu du fait du dépôt de l'huile dans les canaux à la surface de la membrane séparatrice, entraînant une diminution de la quantité de perméat récupérée à la périphérie du filtre. On mesure le débit au bout de 20h de filtration. La mesure du débit caractéristique du filtre est exprimée en L/min par mètre de longueur de filtre après 20h de filtration. Dans le tableau les résultats de débit ont été exprimés par référence aux données enregistrées pour l'exemple 1 comparatif. Plus précisément, une valeur supérieure à 100% indique un débit augmenté par rapport à la référence et donc une amélioration de la capacité de filtration.

La comparaison des valeurs d'homogénéité caractérisant la structure selon l'exemple 1 (obtenu selon les techniques actuelles) et de la structure selon l'exemple 2 (modifié selon les critères de la présente invention) montre qu'il est possible d'améliorer sensiblement les performances du filtre par application des principes de la présente invention.

Le filtre selon l'exemple 2 montre en effet un rapport d'épaisseur moyenne de la membrane sensiblement plus élevé que pour l'exemple 1 ainsi qu'un débit en filtrat très significativement supérieur au bout de 20 heures d'activité.

Le filtre selon le mode de réalisation de l'invention illustré par la figure 3 (correspondant à l'exemple 3) permet également d'améliorer l'homogénéité de dépôt de la membrane tout en maintenant un débit de perméat après 20 h sensiblement amélioré par rapport à l'exemple 1 de référence.

Le filtre selon l'exemple 4 est comparable avec celui de l'exemple 3 (selon l'invention), les tailles et géométries de canaux étant similaires. Contrairement aux requis de la présente invention, le nombre de canaux périphériques B (de plus petit diamètre hydraulique) selon l'exemple/la figure 4 est cependant inférieur au nombre de canaux périphériques de plus grand diamètre hydraulique (canaux A). La comparaison des performances de filtration des filtres selon les exemples 3 et 4, sur la base des données reportées dans le tableau 1, montre qu'il est nécessaire que le nombre de canaux périphériques B de plus petite taille soit supérieur ou égal au nombre de canaux périphériques A de plus grande taille, afin d'obtenir une répartition homogène du dépôt tout en maintenant une les meilleures capacité de filtration améliorée. Un tel résultat apparaît totalement inattendu au vu des connaissances actuelles dans le domaine des filtres tangentiels.

Sur la figure 7, on a représenté une vue selon une coupe en section transversale d'un autre support de filtre selon la présente invention, comprenant une partie centrale ne comprenant que des canaux Ci de forme circulaire selon ledit plan de section et des canaux périphériques A et B, le canal B présentant une section identique à celui des canaux Ci et des canaux A de plus grand diamètre hydraulique, présentant une forme évasée (ovoïde), en forme de goutte et dont l'extrémité de plus grande dimension est orientée vers le centre du filtre. Une telle configuration s'est avérée particulièrement avantageuse pour maximiser la surface de filtration tout en préservant une épaisseur de paroi entre les canaux A et B suffisante pour maximiser le débit de perméat et obtenir un rapport acceptable de l'épaisseur moyenne des membranes, tel que mesuré respectivement sur les canaux A et les canaux B.

Tableau 1

| | Filtre de l'art Exemple 1 | Exemple 2 (selon l'invention) | Exemple 3 (selon l'invention) | Exemple 4 (comparatif exemple 4) |
|---|---|---|---|---|
| Figure associée | Figure 1 | Figure 2 | Figure 3 | Figure 4 |
| $S_A$ = Surface canal A (mm$^2$) | 1,52 | 5,89 | 5,65/7,08 | 5,65/7,08/7,64 |
| $S_B$ = Surface canal B (mm$^2$) | 3,14 | 3,14 | 3,14 | 3,14 |
| Rapport de surface Rs = $S_A / S_B$ | 0,48 | 1,87 | 1,80/2,25 | 1,80/2,25/2,43 |
| Diamètre hydraulique $Dh_A$ canal A (mm) | 1,25 | 2,41 | 2,57/2,77 | 2,57/2,77/2,83 |
| Diamètre hydraulique $Dh_B$ canal B (mm) | 2,00 | 2,00 | 2,00 | 2,00 |
| Rapport Dh = $Dh_A / Dh_B$ | 0,62 | 1,20 | 1,28/1,38 | 1,28/1,38/1,41 |
| Epaisseur moyenne de la paroi externe (mm) | 1,1 | 1,1 | 0,5 | 0,6 |
| Nombre de canaux A / nombre de canaux B | 1/3 | 1/3 | 4/5 | 4/3 |
| Surface de filtration m$^2$ / m de longueur de filtre | 0,38 | 0,37 | 0 , 44 | 0,42 |
| OFA % | 37 | 39 | 48 | 50 |
| Rapport d'épaisseur moyenne de la membrane | 0,85 | 0,91 | 0,89 | 0,85 |
| Mesure de débit relative (en %) | 100 | 116 | 107 | 101 |

**Revendications**

1. Filtre tangentiel pour la filtration d'un fluide tel qu'un liquide, comprenant ou constitué par un élément support (1) fait dans un matériau inorganique poreux de préférence non oxyde, ledit élément présentant une forme tubulaire délimitée par une surface externe (2) et comprenant dans sa portion interne (3) un ensemble de canaux (4) adjacents, d'axes parallèles entre eux et séparés les uns des autres par des parois (8) dudit matériau inorganique poreux, dans lequel lesdits canaux (4) sont recouverts sur leur surface interne d'une couche séparatrice membranaire (5) destinée à entrer en contact avec ledit fluide à filtrer circulant dans lesdits canaux, **caractérisé en ce que**, selon un plan transversal P perpendiculaire à l'axe central dudit support tubulaire:

   a) ledit support ne comprend dans sa partie centrale que des canaux internes $C_i$ ne partageant pas de paroi commune avec ladite surface externe, lesdits canaux internes présentant un diamètre hydraulique sensiblement équivalent,
   b) ledit support comprend en outre des canaux périphériques Cp, dont au moins deux canaux périphériques adjacents A et B, chacun desdits deux canaux A et B partageant une paroi commune (6, 7) avec ladite surface externe(2),

c) le rapport $D_h$ entre :

- le diamètre hydraulique $Dh_A$ du premier canal A sur
- le diamètre hydraulique $Dh_B$ du second canal B, est supérieur ou égal à 1,1,

d) le nombre de canaux périphériques B est supérieur ou égal au nombre de canaux périphériques A,

e) le canal B présente un diamètre hydraulique $Dh_B$ sensiblement identique au diamètre hydraulique des canaux internes ($C_i$).

**2.** Filtre tangentiel selon la revendication précédente, dans lequel le canal B de plus petit diamètre hydraulique présente, selon ledit plan transversal P, une forme sensiblement équivalente à celle desdits canaux internes.

**3.** Filtre tangentiel selon l'une des revendications précédentes, dans lequel, selon ledit plan transversal P, le rapport $Rs = S_A/S_B$ des surfaces internes $S_A$ et $S_B$, respectivement des canaux périphériques A et B, est compris entre 1,1 et 3,5.

**4.** Filtre tangentiel selon l'une des revendications précédentes, dans lequel, selon ledit plan transversal P, les canaux internes (Ci) et de préférence le canal B présente une section sensiblement elliptique, le rapport entre le grand axe et le petit axe de l'ellipse étant compris entre 2 et 1, de préférence entre 1,5 et 1 et de manière très préférée entre 1,2 et 1.

**5.** Filtre tangentiel selon l'une des revendications précédentes, dans lequel les canaux internes (Ci) présentent une section sensiblement circulaire, selon ledit plan transversal P.

**6.** Filtre tangentiel selon l'une des revendications précédentes, dans lequel le canal B présente une section sensiblement circulaire, selon ledit plan transversal P.

**7.** Filtre tangentiel selon l'une des revendications précédentes, dans lequel le canal A est de forme évasée, ou encore de forme elliptique, et dans lequel sa surface, selon ledit plan transversal P, s'étend principalement selon un axe depuis la périphérie de l'élément support vers son axe central.

**8.** Filtre tangentiel selon l'une des revendications précédentes, dans lequel la surface de la paroi commune entre le canal A et la surface externe est courbe.

**9.** Filtre tangentiel selon l'une des revendications précédentes dans lequel l'élément support est à base polygonale ou à base circulaire.

**10.** Filtre tangentiel selon l'une des revendications précédentes dans lequel au moins un canal interne Ci ne partage pas de paroi commune avec un canal périphérique A.

**11.** Filtre tangentiel selon l'une des revendications précédentes dans lequel l'élément support ne comporte dans sa couronne périphérique que des canaux A et des canaux B.

**12.** Filtre tangentiel selon l'une des revendications précédentes dans lequel le support poreux comprend un matériau choisi parmi le carbure de silicium, SiC, en particulier le SiC fritté en phase liquide ou en phase solide, le SiC recristallisé, le nitrure de Silicium, en particulier $Si_3N_4$, l'oxynitrure de Silicium, en particulier $Si_2ON_2$, l'oxynitrure de Silicium et d'Aluminium, ou une combinaison de ceux-ci.

**13.** Filtre tangentiel selon l'une des revendications précédentes dans lequel la couche séparatrice membranaire comprend et de préférence est constituée par un matériau céramique, de préférence non oxyde, de préférence encore choisi dans la liste constituée par le carbure de silicium SiC, en particulier le SiC fritté en phase liquide ou en phase solide ou le SiC recristallisé, le nitrure de Silicium, en particulier $Si_3N_4$, l'oxynitrure de Silicium, en particulier $Si_2ON_2$, l'oxynitrure de Silicium et d'Aluminium, le nitrure de bore BN, ou une combinaison de ceux-ci.

**14.** Filtre tangentiel selon l'une des revendications précédentes dans lequel la porosité du matériau constituant l'élément support est comprise entre 20 et 60 %, le diamètre médian de pores du matériau constituant le support poreux étant de préférence compris entre 5 et 50 micromètres.

**15.** Filtre tangentiel selon l'une des revendications précédentes dans lequel le diamètre médian équivalent de pores du matériau formant la couche séparatrice membranaire est compris entre 1 nm et 5 micromètres.

**Patentansprüche**

**1.** Tangentialfilter zur Filtration eines Fluids, beispielsweise einer Flüssigkeit, umfassend oder bestehend aus einem Stützelement (1) aus einem porösen anorganischen Material, vorzugsweise Nichtoxid, wobei das Element eine rohrförmige Form aufweist, die durch eine Außenfläche (2) begrenzt ist, und umfassend in seinem Innenabschnitt (3) eine Reihe von benachbarten Kanälen (4) mit Achsen parallel zueinander, und durch Wände (8) des porösen anorganischen Materials voneinander getrennt, wobei die Kanäle (4) auf ihrer Innenfläche mit einer Membrantrennschicht (5) bedeckt sind, die ausgelegt ist, um mit dem zu filternden Fluid in Kontakt zu kommen, das in den Kanälen zirkuliert, **dadurch gekennzeichnet, dass** entlang einer Querebene P senkrecht zur Mittelachse der rohrförmigen Stütze:

a) die Stütze in ihrem zentralem Teil nur Innenkanäle $C_i$ umfasst, die keine gemeinsame Wand mit der Außenfläche teilen, wobei die Innenkanäle einen im Wesentlichen äquivalenten hydraulischen Durchmesser aufweisen,
b) die Stütze ferner Umfangskanäle Cp, davon mindestens zwei benachbarte Umfangskanäle A und B umfasst, wobei jeder der zwei Kanäle A und B eine gemeinsame Wand (6, 7) mit der Außenfläche (2) teilt,
c) das Verhältnis $D_h$ zwischen:

- dem hydraulischen Durchmesser $D_{hA}$ des ersten Kanals A und
- dem hydraulischen Durchmesser $D_{hB}$ des zweiten Kanals B größer oder gleich 1,1 ist,

d) die Anzahl der Umfangskanäle B größer oder gleich der Anzahl der Umfangskanäle A ist,
e) der Kanal B einen hydraulischen Durchmesser $Dh_B$ aufweist, der im Wesentlichen mit dem hydraulischen Durchmesser der Innenkanäle ($C_i$) identisch ist.

**2.** Tangentialfilter nach dem vorhergehenden Anspruch, wobei der Kanal B mit kleinerem hydraulischen Durchmesser entlang der Querebene P eine Form aufweist, die im Wesentlichen mit derjenigen der Innenkanäle äquivalent ist.

**3.** Tangentialfilter nach einem der vorhergehenden Ansprüche, wobei gemäß der Querebene P das Verhältnis Rs = $S_A/S_B$ jeweils der Innenflächen $S_A$ und $S_B$ der Umfangskanäle A und B zwischen 1,1 und 3,5 liegt.

**4.** Tangentialfilter nach einem der vorhergehenden Ansprüche, wobei gemäß der Querebene P die Innenkanäle (Ci) und vorzugsweise der Kanal B einen im Wesentlichen elliptischen Abschnitt aufweisen, wobei das Verhältnis zwischen der Hauptachse und der Nebenachse der Ellipse zwischen 2 und 1, vorzugsweise zwischen 1,5 und 1, und sehr bevorzugt zwischen 1,2 und 1 liegt.

**5.** Tangentialfilter nach einem der vorhergehenden Ansprüche, wobei die Innenkanäle (Ci) entlang der Querebene P einen im Wesentlichen kreisförmigen Querschnitt aufweisen.

**6.** Tangentialfilter nach einem der vorhergehenden Ansprüche, wobei der Kanal B gemäß der Querebene P einen im Wesentlichen kreisförmigen Querschnitt aufweist.

**7.** Tangentialfilter nach einem der vorhergehenden Ansprüche, wobei der Kanal A eine aufgeweitete Form oder auch eine elliptische Form aufweist, und wobei sich seine Oberfläche gemäß der Querebene P hauptsächlich entlang einer Achse vom Umfang des Stützelements in Richtung seiner Mittelachse erstreckt.

**8.** Tangentialfilter nach einem der vorhergehenden Ansprüche, wobei die Oberfläche der gemeinsamen Wand zwischen dem Kanal A und der Außenfläche gekrümmt ist.

**9.** Tangentialfilter nach einem der vorhergehenden Ansprüche, wobei das Stützelement eine polygonale Basis oder kreisförmige Basis aufweist.

**10.** Tangentialfilter nach einem der vorhergehenden Ansprüche, wobei mindestens ein Innenkanal Ci keine gemeinsame Wand mit einem Umfangskanal A teilt.

**EP 3 145 626 B1**

**11.** Tangentialfilter nach einem der vorhergehenden Ansprüche, wobei das Stützelement in seinem Umfangsring nur Kanäle A und Kanäle B umfasst.

**12.** Tangentialfilter nach einem der vorhergehenden Ansprüche, wobei die poröse Stütze ein Material, ausgewählt aus Siliciumcarbid, SiC, insbesondere gesintertem SiC in flüssiger Phase oder in fester Phase, rekristallisiertem SiC, Siliciumnitrid, insbesondere $Si_3N_4$, Siliciumoxynitrid, insbesondere $Si_2ON_2$, Silicium und Aluminiumoxynitrid oder eine Kombination davon umfasst.

**13.** Tangentialfilter nach einem der vorhergehenden Ansprüche, wobei die Membrantrennschicht ein Keramikmaterial, vorzugsweise Nichtoxid, umfasst und vorzugsweise aus diesem besteht, vorzugsweise auch ausgewählt aus der Liste, bestehend aus Siliciumcarbid SiC, insbesondere gesintertem SiC in flüssiger oder fester Phase, oder rekristallisiertem SiC, Siliciumnitrid, insbesondere $Si_3N_4$, Siliciumoxynitrid, insbesondere $Si_2ON_2$, Silicium- und Aluminiumoxynitrid, Bornitrid BN oder eine Kombination davon.

**14.** Tangentialfilter nach einem der vorhergehenden Ansprüche, wobei die Porosität des das Stützelement bildenden Materials zwischen 20 und 60 % liegt, der mittlere Porendurchmesser des die poröse Stütze bildenden Materials vorzugsweise zwischen 5 und 50 Mikrometer liegt.

**15.** Tangentialfilter nach einem der vorhergehenden Ansprüche, wobei der äquivalente mittlere Porendurchmesser des Materials, das die Membrantrennschicht bildet, zwischen 1 nm und 5 Mikrometer liegt.

**Claims**

**1.** A tangential filter for the filtration of a fluid such as a liquid, comprising or consisting of a support element (1) made from a porous, preferably non-oxide, inorganic material, said element having a tubular shape delimited by an outer surface (2) and comprising in its inner portion (3) a set of adjacent channels (4), having axes that are parallel to one another and separated from one another by walls (8) of said porous inorganic material, wherein said channels (4) are covered over their inner surface with a membrane separation layer (5) intended to come into contact with said fluid to be filtered circulating in said channels, **characterized in that**, along a transverse plane P perpendicular to the central axis of said tubular support:

a) said support comprises in its central portion only inner channels $C_i$ that do not share a common wall with said outer surface, said inner channels having a substantially equivalent hydraulic diameter,
b) said support additionally comprises peripheral channels Cp, including at least two adjacent peripheral channels A and B, each of said two channels A and B sharing a common wall (6, 7) with said outer surface (2),
c) the ratio $D_h$ of:

- the hydraulic diameter $D_{hA}$ of the first channel A to
- the hydraulic diameter $D_{hB}$ of the second channel B, is greater than or equal to 1.1,

d) the number of peripheral channels B is greater than or equal to the number of peripheral channels A,
e) the channel B has a hydraulic diameter $Dh_B$ substantially identical to the hydraulic diameter of the inner channels ($C_i$).

**2.** The tangential filter as claimed in the preceding claim, wherein the channel B of smaller hydraulic diameter has, along said transverse plane P, a shape substantially equivalent to that of said inner channels.

**3.** The tangential filter as claimed in either of the preceding claims, wherein, along said transverse plane P, the ratio $Rs = S_A/S_B$ of the internal surface areas $S_A$ and $S_B$, respectively of the peripheral channels A and B, is between 1.1 and 3.5.

**4.** The tangential filter as claimed in one of the preceding claims, wherein, along said transverse plane P, the inner channels (Ci) and preferably the channel B have a substantially elliptical cross section, the ratio of the large axis to the small axis of the ellipse being between 2 and 1, preferably between 1.5 and 1 and very preferably between 1.2 and 1.

**5.** The tangential filter as claimed in one of the preceding claims, wherein the inner channels (Ci) have a substantially

13

circular cross section, along said transverse plane P.

6. The tangential filter as claimed in one of the preceding claims, wherein the channel B has a substantially circular cross section, along said transverse plane P.

7. The tangential filter as claimed in one of the preceding claims, wherein the channel A is of flared shape, or else of elliptical shape, and wherein its surface, along said transverse plane P, extends principally along an axis from the periphery of the support element to its central axis.

8. The tangential filter as claimed in one of the preceding claims, wherein the surface of the common wall between the channel A and the outer surface is curved.

9. The tangential filter as claimed in one of the preceding claims, wherein the support element has a polygonal base or a circular base.

10. The tangential filter as claimed in one of the preceding claims, wherein at least one inner channel Ci does not share a common wall with a peripheral channel A.

11. The tangential filter as claimed in one of the preceding claims, wherein the support element comprises in its peripheral ring only channels A and channels B.

12. The tangential filter as claimed in one of the preceding claims, wherein the porous support comprises a material selected from silicon carbide, SiC, in particular liquid-phase or solid-phase sintered SiC, recrystallized SiC, silicon nitride, in particular $Si_3N_4$, silicon oxynitride, in particular $Si_2ON_2$, silicon aluminum oxynitride, or a combination thereof.

13. The tangential filter as claimed in one of the preceding claims, wherein the membrane separation layer comprises and preferably consists of a ceramic material, preferably a non-oxide ceramic material, more preferably selected from the list consisting of silicon carbide SiC, in particular liquid-phase or solid-phase sintered SiC or recrystallized SiC, silicon nitride, in particular $Si_3N_4$, silicon oxynitride, in particular $Si_2ON_2$, silicon aluminum oxynitride, boron nitride BN, or a combination thereof.

14. The tangential filter as claimed in one of the preceding claims, wherein the porosity of the material constituting the support element is between 20% and 60%, the median pore diameter of the material constituting the porous support preferably being between 5 and 50 micrometers.

15. The tangential filter as claimed in one of the preceding claims, wherein the equivalent median pore diameter of the material forming the membrane separation layer is between 1 nm and 5 micrometers.

FIG. 1

FIG. 2

FIG. 3

FIG. 4

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5454947 A
- EP 0686424 A
- EP 0778073 A
- EP 0778074 A
- EP 0780148 A
- WO 0029098 A
- WO 0162370 A
- US 7699903 B2
- US 6077436 A